# FASCICULE DE BREVET EUROPEEN

(11) **EP 0 374 670 B1**
(45) Date de publication et mention de la délivrance du brevet: **29.12.1993**
(21) Numéro de dépôt: 89122811.6
(22) Date de dépôt: 11.12.1989
(51) Int. Cl.: H04L 12/42

(54) **Dispositif d'autocicatrication d'une liaison en anneau**
Selbstheilende Vorrichtung einer Schleifenverbindung
Self-repairing device for a ring connection

(30) Priorité: 12.12.1988 FR 8816316
(43) Date de publication de la demande: 27.06.1990
(73) Titulaire: ALCATEL CIT, 75008 Paris (FR)
(72) Inventeur: Cozic, Jean Yves, F-22300 Lannion (FR)
(74) Mandataire: Weinmiller, Jürgen

(56) Documents cités:
- EP-A- 0 086 577
- PATENT ABSTRACTS OF JAPAN, vol. 8, no. 226 (E-272)[1663], 17 octobre 1984 & JP-A-59 107 665

## Description

L'invention concerne l'autocicatrisation d'une liaison en anneau, utilisée pour l'interconnexion d'un grand nombre de stations.

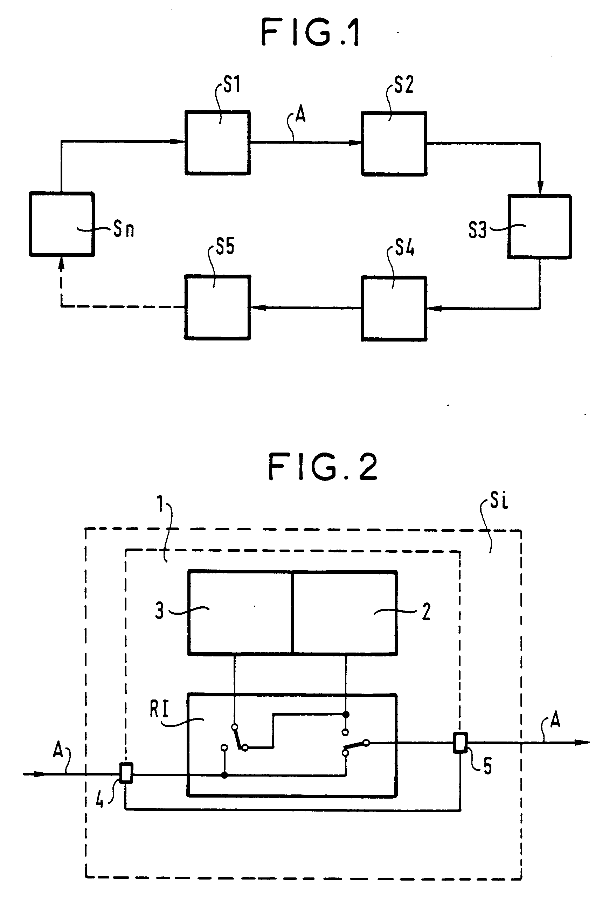

Dans un réseau en anneau les différentes stations S1 à Sn, figure 1, sont reliées en série par un anneau A. Un message émis par une station passe à travers chacune des stations raccordées à l'anneau avant de revenir à la station émettrice. La station destinataire du message le recopie au passage, et réémet ce message sur l'anneau, argumenté entre autres d'un indicateur "message copié".

Chaque station a la possibilité de s'insérer ou de se retirer de l'anneau. Dans ce dernier cas, et comme représenté schématiquement figure 2, la continuité de l'anneau est assurée par un relais d'insertion RI porté par une carte coupleur 1 de la station, cette carte coupleur étant équipée d'un circuit d'émission 2 et d'un circuit de réception 3. Le raccordement de la carte coupleur à l'anneau A s'effectue au moyen de connecteurs 4 et 5, l'anneau étant constitué entre chaque station, figure 1, par un cordon muni à chaque extrémité d'un connecteur. Au repos le relais d'insertion RI assure, d'une part la continuité métallique de l'anneau, et d'autre part le rebouclage du circuit de réception 3 sur le circuit d'émission 2.

Une telle architecture présente un gros inconvénient ; en cas de retrait d'une carte coupleur ou d'un cordon, l'anneau s'ouvre et n'est plus opérationnel tant que la situation n'a pas été rétablie : remise en place de la carte coupleur ou du cordon. Ceci n'est pas tolérable quand le temps d'indisponibilité exigé par le réseau utilisant ce type de coupleur doit rester inférieur à la seconde.

L'invention a pour but de pallier ce défaut en limitant le temps d'indisponibilité de l'anneau à une centaine de millisecondes.

L'invention a pour objet un dispositif d'autocicatrication d'une liaison en anneau reliant des stations, ladite liaison comportant au moins un anneau et au moins un anneau de secours, et chaque station comportant pour chaque anneau un coupleur ayant un relais d'insertion, un connecteur amont et un connecteur aval, ledit relais d'insertion étant situé entre lesdits connecteurs amont et aval auxquels il est relié, un cordon comportant ladite liaison et muni à chaque extrémité d'un connecteur reliant un connecteur aval d'une station à un connecteur amont d'une station suivante. Un tel dispositif est décrit dans le breuet EP-A-0 086 577. L'invention est caractérisée par le fait que le dispositif comprend pour chaque anneau, un anneau de secours ne véhiculant aucune information en fonctionnement normal, que chaque coupleur comporte un circuit d'autocicatrisation amont entre le connecteur amont et le relais d'insertion, un circuit d'autocicatrisation aval entre le relais d'insertion et le connecteur aval, et une liaison de secours reliant les circuits d'autocicatrisation amont et aval, que chaque cordon reliant deux stations comporte en outre l'anneau de secours et deux liaisons de détection, que chaque circuit d'autocicatrisation comporte un relais et un circuit de commande dudit relais, ledit relais ayant un premier contact mobile relié au relais d'insertion un deuxième contact mobile relié à la liaison de secours, un premier contact fixe relié à l'anneau, un deuxième et un troisième contacts fixes reliés entre eux, et un quatrième contact fixe relié à l'anneau de secours, que l'une des deux liaisons de détection d'un cordon est reliée dans un circuit d'autocicatrisation amont d'une part à un potentiel positif par une résistance et d'autre part au circuit de commande et dans un circuit d'autocicatrisation aval à une masse, l'autre liaison de détection étant reliée dans un circuit d'autocicatrisation amont à une masse et dans un circuit d'autocicatrisation aval d'une part à un potentil positif par une résistance et d'autre part au circuit de commande, que dans chaque circuit d'autocicatrisation le premier contact mobile coopère, en position repos, avec le premier contact fixe pour relier l'anneau au relais d'insertion le deuxième contact mobile coopèrant, en position repos, avec le quatrième contact fixe pour relier l'anneau de secours à la liaison de secours et que dans chaque circuit d'autocicatrisation le premier contact mobile coopère, en position travail, avec le deuxième contact fixe et le deuxième contact mobile coopère en position travail avec le troisième contact fixe pour relier le relais d'insertion à la liaison de secours.

L'invention s'applique à tout réseau dont les stations sont reliées par au moins un anneau. Dans le cas où les stations sont reliées par deux anneaux, l'invention prévoit deux anneaux de secours, chaque anneau normal étant secouru par un anneau de secours.

L'invention va être décrite à l'aide d'exemples de réalisation illustrés par les figures annexées dans lesquelles :
- la figure 1 représente un réseau en anneau de type connu,
- la figure 2 représente schématiquement une station du réseau de la figure 1,
- la figure 3 représente un réseau en anneau comportant le dispositif d'autocicatrisation de l'invention,
- la figure 4 représente un coupleur d'une station de la figure 3,
- la figure 5 représente la topologie du réseau de la figure 3 dans le cas d'une rupture, ou d'un retrait d'un cordon reliant deux stations,
- la figure 6 représente la topologie du réseau de la figure 3 dans le cas du retrait d'un coupleur d'une station,
- la figure 7 représente un réseau à deux anneaux.

Les figures 1 et 2 se rapportent à l'art antérieur indiqué précédemment.

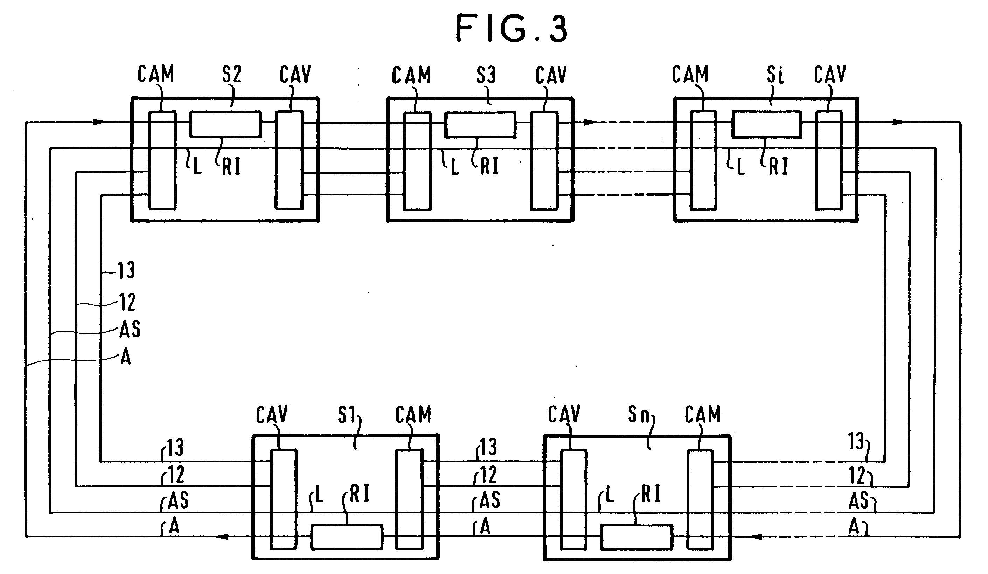

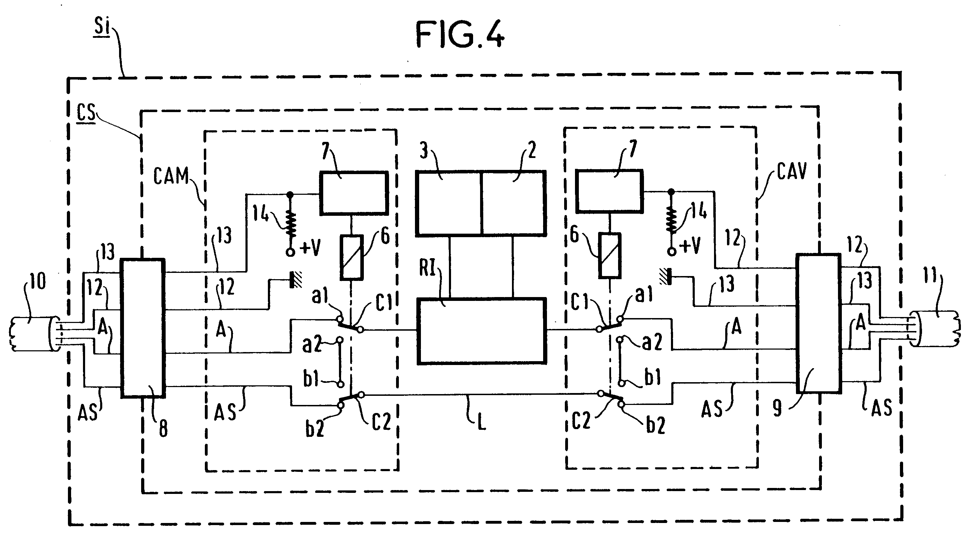

La figure 3 représente schématiquement un réseau en anneau comportant le dispositif d'autocicatrisation de l'invention. Dans cette figure le réseau comprend n stations S1 à Sn reliées en série par un anneau A, qui correspond à l'anneau A de la figure 1, et par un anneau de secours AS. Chaque coupleur de station comporte outre les circuits d'émission et de réception, non représentés, et le relais d'insertion RI, un circuit d'autocicatrisation amont CAM et un circuit d'autocicatrisation aval CAV. Le circuit d'autocicatrisation amont CAM d'une station Si est relié au circuit d'autocicatrisation aval CAV de la station précédente Si-1 par deux liaisons de détection 12 et 13 ; la liaison 13 permet d'indiquer à la station Si la présence du coupleur de la station Si-1, et la liaison 12 permet d'indiquer à la station Si-1 la présence du coupleur de la station Si, comme cela sera précisé lors de la description de la figure 4. Dans chaque station le circuit d'autocicatrisation amont CAM, le relais d'insertion RI et le circuit d'autocicatrisation aval CAV assurent la continuité de l'anneau A entre l'entrée et la sortie de la station ; la continuité de l'anneau de secours AS est assurée par les circuits d'autocicatrisation amont et aval et par une liaison de secours L reliant dans chaque coupleur les circuits d'autocicatrisation amont et aval. Entre chaque station les liaisons de détection 12 et 13, l'anneau A et l'anneau de secours AS constituent un cordon muni de connecteurs à ses extrémités, pour raccordement aux coupleurs des stations. Lorsque toutes les stations sont en fonctionnement et qu'aucun cordon n'est coupé, ou manquant, l'anneau de secours AS ne véhicule aucune information et dans chaque station la continuité d'une part de l'anneau A et d'autre part de l'anneau de secours AS est assurée.

La figure 4 représente le coupleur CS d'une station Si de la figure 3, qui est une carte amovible. Le coupleur est relié par un connecteur amont 8 et un cordon 10 au coupleur de la station précédente Si-1, et par un connecteur aval 9 et un cordon 11 au coupleur de la station suivante Si+1 ; comme dans la figure 3, chaque cordon est constitué de l'anneau, A, de l'anneau de secours AS, et des deux liaisons de détection 12 et 13. Le coupleur CS comprend les circuits d'émission 2 et de réception 3, le relais d'insertion RI, un circuit d'autocicatrisation amont CAM et circuit d'autocicatrisation aval CAV.

Chaque circuit d'autocicatrisation comporte un relais 6 et un circuit de commande 7 dudit relais. Le relais 6 comporte deux contacts mobiles C1 et C2 et quatre contacts fixes a1, a2, b1 et b2, les contacts fixes a2 et b1 étant reliés entre eux ; le contact mobile C1 est relié au relais d'insertion RI et le contact mobile C2 est relié à la liaison de secours L.

Le cordon 10 et le circuit d'autocicatrisation amont CAM sont reliés par l'intermédiaire du connecteur amont 8 ; l'anneau de secours AS est relié au contact fixe b2, l'anneau A est relié au contact fixe a1, la liaison de détection 12 est reliée à la masse, et la liaison de détection 13 est reliée d'une part au circuit de commande 7 et d'autre part à un potentiel positif +V par une résistance 14. Dans la station précédente Si-1, la liaison de détection 13 est reliée à la masse et la liaison de détection 12 est reliée au circuit de commande 7 et par une résistance 14 à un potentiel positif +V, du circuit d'autocicatrisation aval CAV de ladite station précédente.

Le cordon 11 et le circuit d'autocicatrisation aval CAV sont reliés par l'intermédiaire du connecteur aval 9 ; l'anneau de secours AS est relié au contact fixe b2, l'anneau A est relié au contact fixe a1, la liaison de détection 13 est reliée à la masse, et la liaison de détection 12 est reliée d'une part au circuit de commande 7 et d'autre part à un potentiel positif +V par une résistance 14. Dans la station suivante Si+1, la liaison de détection 12 est reliée à la masse, et la liaison de détection 13 est reliée au circuit de commande 7 et par une résistance 14 à un potentiel positif +V, du circuit d'autocicatrisation amont CAM de ladite station suivante.

En fonctionnement normal la topologie du réseau en anneau est celle de la figure 3. Dans chaque station l'anneau A est relié au relais d'insertion RI par les contacts mobiles C1 des relais 6 des circuits d'autocicatrisation amont et aval, lesdits contacts mobiles C1 coopérant avec les contacts fixes a1 pour assurer la continuité métallique de l'anneau A ; les contacts du relais d'insertion RI, situés entre les contacts mobiles C1 permettent à la station de s'insérer ou de se retirer de l'anneau. La continuité de l'anneau de secours AS est assurée par la liaison de secours L et les contacts mobiles C2 qui coopèrent avec les contacts fixes b2, la liaison de secours L reliant entre eux lesdits contacts mobiles C2.

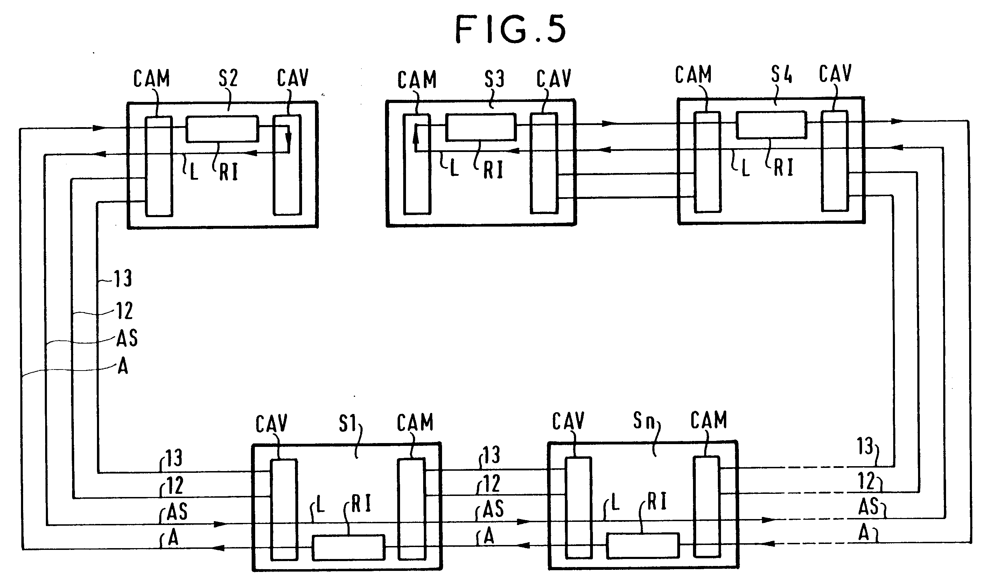

La figure 5 représente la topologie du réseau en anneau en cas de retrait, ou de rupture, d'un cordon entre deux stations, par exemple les stations S2 et S3. Dans le circuit d'autocicatrisation aval CAV de la station S2, et dans le circuit d'autocicatrisation amont CAM de la station S3, les relais 6 passent en position travail ; en effet, suite à la rupture ou au retrait du cordon les liaisons de détection 12 et 13 ne sont plus reliées à la masse de sorte que dans le circuit d'autocicatrisation amont CAM la liaison de détection 13 prend le potentiel +V et dans le circuit d'autocicatrisation aval CAV la liaison de détection 12 prend le potentiel +V ; les circuits de commande 7 commandent alors les relais 6 qui passent en position travail. Dans le circuit d'autocicatrisation aval CAV de la station S2 le contact mobile C1 coopère avec le contact fixe a2, et le contact mobile C2 coopère avec le contact fixe b1 ce qui assure le rebouclage de l'anneau A sur l'anneau de secours AS ; de même dans le circuit d'autocicatrisation amont CAM de la station S3 le contact mobile C1 coopère avec le contact fixe a2, et le contact mobile C2 coopère avec le contact fixe b1, ce qui assure le rebouclage de l'anneau de secours AS sur l'anneau A. Les informations circulent sur l'anneau de secours AS en sens inverse de celui de l'anneau A ; les stations sont toujours vues, sur l'anneau A, dans le même sens que lorsque le cordon entre les stations S2 et S3 n'était pas rompu, l'ordre de succession des stations sur l'anneau A étant toujours le même et ce quel que soit le sens de circulation des informations sur l'anneau.

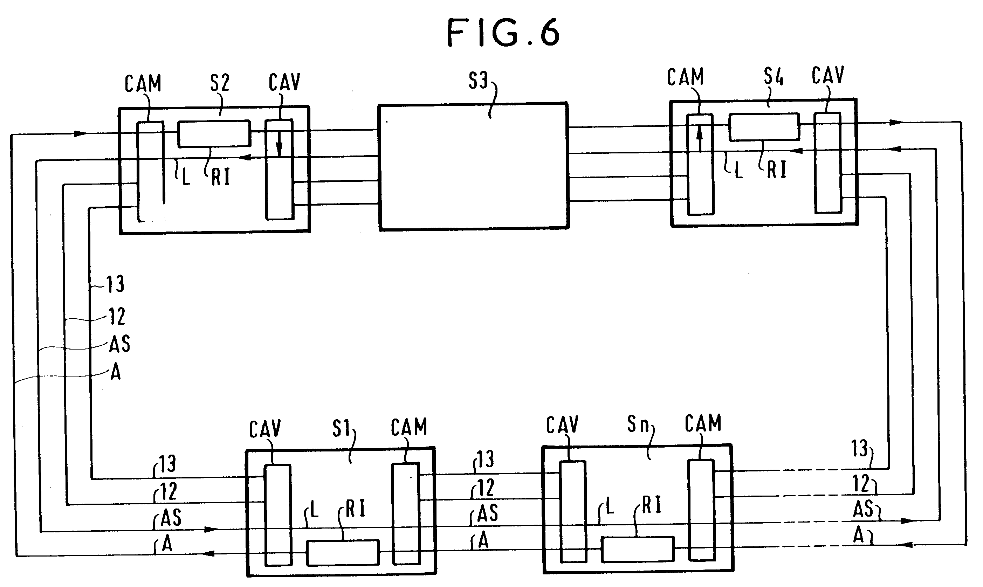

La figure 6 représente la topologie d'un réseau dans le cas du retrait d'un coupleur d'une station, par exemple du coupleur de la station S3 dans le cas de la figure 6, où la station S3 est représenté sans son coupleur. Le retrait du coupleur entraîne dans la station la coupure de l'anneau A, de l'anneau de secours AS ainsi que celles des liaisons de détection 12 et 13 d'une part avec la station précédente S2 et d'autre part avec la station suivante S4. il en découle que dans la station précédente S2 le relais 6 du circuit d'autocicatrisation aval CAV se met en position travail et assure le rebouclage de l'anneau A sur l'anneau de secours AS par ses contacts mobiles C1 et C2, et que dans la station suivante S4 le relais 6 du circuit d'autocicatrisation amont CAM se met en position travail et assure le rebouclage de l'anneau de secours AS sur l'anneau A par ses contacts mobiles C1 et C2. De cette manière les informations circulent sur l'anneau de secours en sens inverse de celui de l'anneau A, l'anneau de secours AS acheminant directement les informations entre les stations S2 et S4 ; ainsi, quel que soit le sens de circulation des informations sur l'anneau A, les stations se succèdent toujours dans le même sens, à l'exception de la station S3 qui du fait du retrait de son coupleur est éliminée du réseau en anneau.

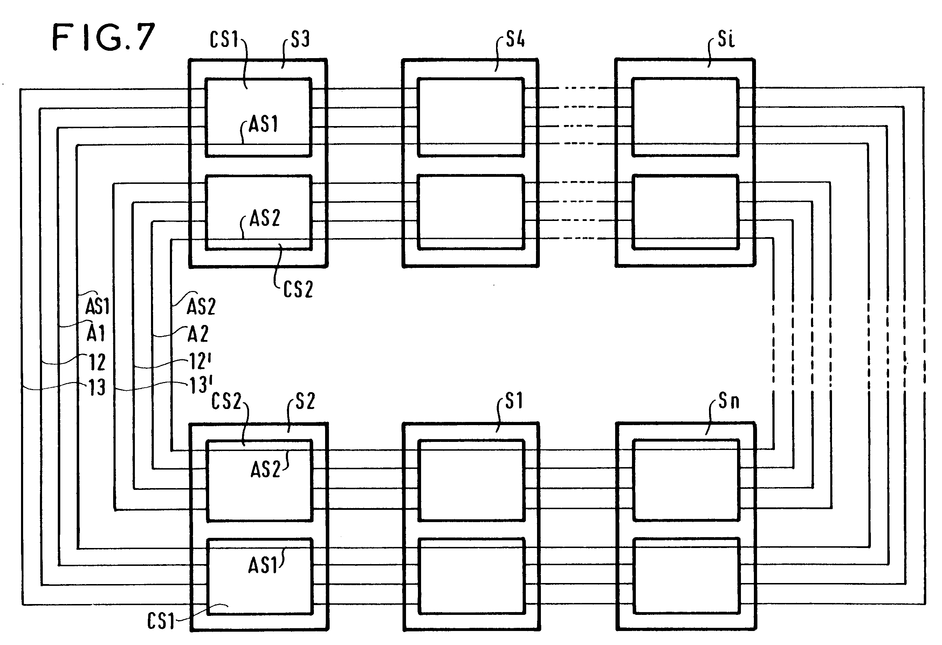

La figure 7 représente schématiquement un réseau à deux anneaux A1 et A2, avec deux anneaux de secours AS1 et AS2.

Chaque station S1 à Sn comporte deux coupleurs CS1 et CS2 identiques au coupleur CS de la figure 4. Le coupleur CS1 est relié à l'anneau A1, à l'anneau de secours AS1 et à deux liaisons de détection 12 et 13 ; le coupleur CS2 est relié à l'anneau A2, à l'anneau de secours AS2 et à deux liaisons de détection 12′ et 13′. Les coupleurs CS1 de deux stations adjacentes sont reliés par un cordon comprenant l'anneau A1, l'anneau de secours AS1 et les deux liaisons de détection 12 et 13 ; les coupleurs CS2 de deux stations adjacentes sont reliés par un autre cordon comprenant l'anneau A2, l'anneau de secours AS2 et les deux liaisons de détection 12′ et 13′. Chaque cordon est équipé à ses extrémités d'un connecteur coopérant avec un connecteur du coupleur auquel il est relié, comme dans la figure 4. Dans les stations de la figure 7 les anneaux de secours AS1 et AS2 ont été représentés, pour les distinguer des anneaux A1, A2, puisque les coupleurs de chaque station assurent la continuité métallique desdits anneaux de secours en fonctionnement normal, c'est-à-dire lorsqu'il n'y a pas rupture ou absence de cordon entre deux stations, et qu'aucun coupleur n'est retiré dans les stations.

Les figures 5 et 6 qui représentent la topologie d'un réseau à un anneau dans le cas de rupture d'un cordon, figure 5, et dans le cas d'absence d'un coupleur, figure 6, sont valables pour chacun des anneaux d'un réseau à deux anneaux, figure 7 puisque pour chaque anneau associé à son anneau de secours on a les mêmes configurations que pour l'anneau A et l'anneau de secours AS représentées figures 5 et 6.

Dans le cas d'une liaison à deux anneaux, figure 7, la rupture ou le retrait d'un cordon ou encore le retrait d'un coupleur entraîne la coupure d'un anneau et l'inaccessibilité d'une station par ledit anneau coupé, mais ladite station reste accessible par l'autre anneau, et peut donc dialoguer avec les autres stations.

Le remplacement du cordon rompu ou du coupleur rétablit la continuité de l'anneau coupé et ladite station devient à nouveau accessible par cet anneau.

Le dispositif d'autocicatrisation de l'invention permet donc d'assurer les échanges d'informations entre les stations en cas de rupture ou de retrait d'un cordon entre deux stations, ou lors du retrait d'un coupleur d'une station ; le fonctionnement des circuits d'autocicatrisation est lié uniquement à la présence ou à la rupture des liaisons de détection 12 et 13, ou 12′ et 13′, et est indépendant du sens de circulation des informations sur le, ou les, anneaux. Dans la description il a été fait référence aux stations précédentes ou suivantes, sans aucune référence au sens de circulation des informations sur l'anneau, ou les anneaux ; on a donc fait l'hypothèse que les stations étaient numérotées arbitrairement, ce qui se justifie dès lors que toutes les stations sont identiques. Les appellations amont et aval utilisées pour distinguer les circuits d'autocicatrisation d'une station ont uniquement pour but de faciliter la description, le circuit amont étant relié à une station précédente et le circuit aval à une station suivante.

Le dispositif d'autocicatrisation de l'invention fonctionne donc quel que soit le sens de circulation des informations sur l'anneau, ou les deux anneaux, et dans ce dernier cas les informations peuvent circuler en sens inverse dans les deux anneaux.

Dans la figure 4, les cordons reliés aux circuits d'autocicatrisation amont et aval ont des repères différents, ceci uniquement dans le but de faciliter la description, mais bien évidemment les cordons 10 et 11, sont identiques ; dans la figure 7 deux stations adjacentes sont reliées par deux cordons identiques aux cordons 10 et 11.

Le dispositif d'autocicatrisation de l'invention permet l'extension du nombre de stations sans interruption des échanges entre les stations, qu'il s'agisse d'un réseau à un anneau, figure 3, ou d'un réseau à deux anneaux, figure 7. L'extension consiste à ajouter aux n stations existantes une ou plusieurs autres stations ; ces stations supplémentaires peuvent prendre place n'importe où, entre deux stations, le problème de l'extension étant indépendant de l'endroit où la ou les stations supplémentaires sont introduites dans le réseau.

Pour insérer une station entre deux stations, par exemple entre les stations Si et S(i+1) on déconnecte le ou les cordons reliant ces deux stations de l'une de ces stations, par exemple la station Si ; cette déconnexion est interprétée comme une rupture de cordon (s) par les stations Si et S(i+1) et le réseau prend la configuration de la figure 5, pour chaque anneau, en remplaçant dans cette figure les stations S2 et S3 par les stations Si et S(i+1). La station supplémentaire est alors reliée par un ou deux cordons à chacune des stations Si et S(i+1), ce qui établit les liaisons de détection 12 et 13 et 12′ et 13′ entre la station Si et la station supplémentaire d'une part et entre la station supplémentaire et la station S(i+1) d'autre part. Les circuits de commande 7 de chaque circuit d'autocicatrisation aval de la station Si, des circuits d'autocicatrisation amont et aval de la station supplémentaire, et de chaque circuit d'autocicatrisation amont de la station S(i+1) détectent la continuité des liaisons de détection et commandent, dans chacun de ces circuit d'autocicatrisation le relais 6 dont les contacts mobiles passent en position repos, ce qui établit la continuité métallique de chaque anneau et de chaque anneau de secours entre la station Si et la station supplémentaire d'une part, et la station supplémentaire et la station S(i+1) d'autre part. On retrouve alors la configuration du réseau à un anneau, figure 3, ou à deux anneaux, figure 7, en fonctionnement normal.

Le retrait d'une station, est l'opération inverse de l'extension ; la station à retirer est déconnectée de la station précédente et de la station suivante, et lesdites stations précédente et suivante sont reliées entre elles par un ou deux cordons.

Dans un circuit d'autocicatrisation, le circuit de commande 7 commande donc le relais 6 pour mettre ses contacts mobiles en position travail lorsque la liaison de détection qui relie ledit circuit de commande à un circuit d'autocicatrisation d'une autre station est rompue ; cette rupture est provoquée soit par la rupture ou le retrait du cordon reliant les deux stations, soit par le retrait du coupleur de l'autre station.

Le dispositif d'autocicatrisation de l'invention permet donc, pour des motifs de réparation ou de maintenance, de pouvoir remplacer un coupleur d'une station sans pour autant arrêter le fonctionnement des autres stations, et dans le cas d'une liaison à deux anneaux sans arrêter le fonctionnent de la station dont un coupleur est retiré, ladite station restant accessible par l'autre anneau. Les microcoupures engendrées lors du retrait, ou de l'enfichage, d'un coupleur sont absorbées par le protocole qui régit les échanges d'information sur l'anneau, ou les anneaux. Le dispositif permet également, pour des motifs d'extension de capacité, de pouvoir augmenter le nombre de stations sans arrêter le fonctionnement des stations déjà en service ; il permet aussi, en cas de rupture d'un cordon reliant deux stations de maintenir le fonctionnement des autres stations, dans le cas d'une liaison à un anneau, et de toutes les stations dans le cas d'une liaison à deux anneaux, la station devenue inaccessible par un anneau suite à la rupture d'un cordon restant accessible par l'autre anneau.

## Revendications

1. Dispositif d'autocicatrisation d'une liaison en anneau reliant des stations (S1 à Sn), ladite liaison comportant au moins un anneau (A) et au moins un anneau de secours (AS), et chaque station comportant pour chaque anneau un coupleur (CS) ayant un relais d'insertion (RI), un connecteur amont (8) et un connecteur aval (9), ledit relais d'insertion étant situé entre lesdits connecteurs amont et aval auxquels il est relié, un cordon (10 ; 11) comportant ladite liaison et muni à chaque extrémité d'un connecteur reliant un connecteur aval d'une station à un connecteur amont d'une station suivante, caractérisé par le fait qu'il comprend pour chaque anneau, un anneau de secours (AS) ne véhiculant aucune information en fonctionnement normal, que chaque coupleur (CS) comporte un circuit d'autocicatrisation amont (CAM) entre le connecteur amont (8) et le relais d'insertion (RI), un circuit d'autocicatrisation aval (CAV) entre le relais d'insertion (RI) et le connecteur aval (9), et une liaison de secours (L) reliant les circuits d'autocicatrisation amont et aval, que chaque cordon reliant deux stations comporte en outre l'anneau de secours (AS) et deux liaisons de détection (12 ; 13), que chaque circuit d'autocicatrisation comporte un relais (6) et un circuit de commande (7) dudit relais, ledit relais ayant un premier contact mobile (C1) relié au relais d'insertion (RI), un deuxième contact mobile (C2) relié à la liaison de secours (L), un premier contact fixe (a1) relié à l'anneau (A), un deuxième (a2) et un troisième (b1) contacts fixes reliés entre eux, et un quatrième contact fixe (b2) relié à l'anneau de secours (AS), que l'une (13) des deux liaisons de détection d'un cordon est reliée dans un circuit d'autocicatrisation amont (CAM) d'une part à un potentiel positif (+V) par une résistance (14) et d'autre part au circuit de commande (7) et dans un circuit d'autocicatrisation aval (CAV) à une masse, l'autre liaison de détection (12) étant relié dans un circuit d'autocicatrisation amont (CAM) à une masse et dans un circuit d'autocicatrisation aval (CAV) d'une part à un potentil positif (+V) par une résistance (14) et d'autre part au circuit de commande (7), que dans chaque circuit d'autocicatrisation le premier contact mobile (C1) coopère, en position repos, avec le premier contact fixe (a1) pour relier l'anneau (A) au relais d'insertion (RI), le deuxième contact mobile (C2) coopèrant, en position repos, avec le quatrième contact fixe (b2) pour relier l'anneau de secours (AS) à la liaison sde secours (L) et que dans chaque circuit d'autocicatrisation le premier contact mobile (C1) coopère, en position travail, avec le deuxième contact fixe (a2) et le deuxième contact mobile (C2) coopère en position travail avec le troisième contact fixe (b2) pour relier le relais d'insertion (RI) à la liaison de secours (L).

2. Dispositif d'autocicatrisation selon la revendication 1, caractérisé par le fait que la liaison en anneau comporte un premier (A1) et un deuxième (A2) anneaux, que chaque station comporte un premier (CS1) et un deuxième (CS2) coupleurs, que les premiers coupleurs (CS1) de deux stations adjacentes sont reliés par un premier cordon, et que les deuxièmes coupleurs (CS2) de deux stations adjacentes sont reliés par un deuxième cordon.

3. Dispositif d'autocicatrisation selon l'une des revendications 1 et 2, caractérisé par le fait que le relais (6) d'un circuit d'autocicatrisation passe en position travail lorsque la liaison de détection (12 ; 13) qui relie son circuit de commande (7) au circuit d'autocicatrisation d'une autre station est rompu.

## Claims

1. A self-healing system for a ring link interconnecting a plurality of stations (S1 to Sn), said link including at least one ring (A) and at least one spare ring (AS), and each station including, for each ring, a coupler (CS) having an insertion relay (RI), an upstream connector (8), and a downstream connector (9), said insertion relay being situated between said upstream and downstream connectors with which it is connected, a cord (10; 11) containing said link and provided at each end with a connector serving to interconnect a downstream connector of one station with an upstream connector of a following station, the system being characterized by the fact that it comprises, for each ring, a spare ring (AS) that conveys no information in normal operation, each coupler (CS) including an upstream self-healing circuit (CAM) between its upstream connector (8) and its insertion relay (RI), a downstream self-healing circuit (CAV) between its insertion relay (RI) and its downstream connector (9), and a spare link (L) interconnecting the upstream and downstream self-healing circuits, each cord interconnecting two stations further containing the spare ring (AS) and two detection links (12; 13), each self-healing circuit including a relay (6) and a relay control circuit (7), said relay having a first moving contact (C1) connected to the insertion relay (RI), a second moving contact (C2) connected to the spare link (L), a first fixed contact (a1) connected to the ring (A), second and third fixed contacts (a2, b1) which are interconnected, and a fourth fixed contact (b2) connected to the spare ring (AS), one (13) of the two detection links in a cord being connected in an upstream self-healing circuit (CAM) both to a positive potential (+V) via a resistor (14) and to the control circuit (7), and being connected in a downstream self-healing circuit (CAV) to ground, the other detection link (12) in an upstream self-healing circuit (CAM) to ground, and in a downstream self-healing circuit (CAV) both to a positive potential (+V) via a resistor (14) and to the control circuit (7), each first moving contact (C1) in each self-healing circuit co-operating, when in the rest position, with the first fixed contact (a1) in order to connect the ring (A) to the insertion relay (RI), while the second moving contact (C2) co- operates, when in the rest position, with the fourth fixed contact (b2) in order to connect the spare ring (AS) to the spare link (L), and the first moving contact (C1) in each self- healing circuit co-operating, in the working position, with the second fixed contact (A2), and with the second moving contact (C2) co-operating in the working position with the third fixed contact (b2), thereby connecting the insertion relay (RI) to the spare link (L).

2. A self-healing system according to claim 1, characterized by the fact that the ring link includes first and second rings (A1, A2), with each station including first and second couplers (CS1, CS2), the first couplers (CS1) of two adjacent stations being interconnected by a first cord and the second couplers (CS2) of two adjacent stations being interconnected by a second cord.

3. A self-healing system according to claim 1 or 2, characterized by the fact that the relay (6) in a self-healing circuit switches to the working position when the detection link (12; 13) connecting its control circuit (7) to the self- healing circuit of another station is broken.

## Patentansprüche

1. Einrichtung zum selbsttätigen Heilen einer Ringverbindung, die mehrere Nachrichtenstationen (S1 bis Sn) miteinander verbindet, wobei die Strecke mindestens einen Ring (A) und mindestens einen Hilfsring (AS) aufweist und jede Station für jeden Ring einen Koppler (CS) mit einem Einfügungsrelais (RI), einem vorderen Stecker (8) und einem hinteren Stecker (9) aufweist, wobei das Einfügungsrelais zwischen dem vorderen und dem hinteren Stecker angeordnet ist, wobei ein Kabel (10; 11) die Verbindung herstellt und an jedem Ende mit einem Gegenstecker versehen ist sowie einen hinteren Stecker einer Station mit einem vorderen Stecker einer nachfolgenden Station verbindet, dadurch gekennzeichnet, daß die Einrichtung für jeden Ring einen Hilfsring (AS) aufweist, der im Normalbetrieb keine Information überträgt, daß jeder Koppler (CS) eine vordere Selbstheilungsschaltung (CAM) zwischen dem vorderen Stecker (8) und dem Einfügungsrelais (RI), eine hintere Selbstheilungsschaltung (CAV) zwischen dem Einfügungsrelais (RI) und dem hinteren Stecker (9), und eine Hilfsstrecke (L) enthält, die die vordere und die hintere Selbstheilungsschaltung verbindet, daß jedes Kabel, das zwei Stationen verbindet, weiter den Hilfsring (AS) und zwei Erfassungsleitungen (12; 13) aufweist, daß jede Selbstheilungsschaltung ein Relais (6) und eine Betätigungsschaltung (7) für das Relais aufweist, wobei das Relais einen ersten, mit dem Einfügungsrelais (RI) verbundenen beweglichen Kontakt (C1), einen zweiten, mit der Hilfsleitung (L) verbundenen beweglichen Kontakt (C2), einen ersten, mit dem Ring (A) verbundenen festen Kontakt (a1), einen zweiten (a2) und einen dritten festen Kontakt (a3), die miteinander verbunden sind, und einen vierten, mit dem Hilfsring (AS) verbundenen festen Kontakt (b2) aufweist, daß eine der beiden Erfassungsleitungen (13) eines Kabels in einer vorderen Selbstheilungsschaltung (CAM) einerseits über einen Widerstand (14) an ein positives Potential (+V) und andererseits an die Betätigungsschaltung (7) und in einer hinteren Selbstheilungsschaltung (CAV) mit Masse verbunden ist, während die andere Erfassungsleitung (12) in einer vorderen Selbstheilungsschaltung (CAM) an eine Masse und in einer hinteren Selbstheilungsschaltung (CAV) einerseits über einen Widerstand (14) mit einem positiven Potential (+V) und andererseits mit der Betätigungsschaltung (7) verbunden ist, daß in jeder Selbstheilungsschaltung der erste bewegliche Kontakt (C1) in der Ruhestellung mit dem ersten festen Kontakt (a1) zusammenwirkt, um den Ring (A) mit dem Einfügungsrelais (RI) zu verbinden, während der zweite bewegliche Kontakt (C2) in der Ruhestellung mit dem vierten festen Kontakt (b2) zusammenwirkt, um den Hilfsring (AS) mit der Hilfsstrecke (L) zu verbinden, und daß in jeder Selbstheilungsschaltung der erste bewegliche Kontakt (C1) in der Arbeitsstellung mit dem zweiten festen Kontakt (a2) zusammenwirkt, während der zweite bewegliche Kontakt (C2) in der Arbeitsstellung mit dem dritten festen Kontakt (b2) zusammenwirkt, um das Einfügungsrelais (R1) mit der Hilfsstrecke (L) zu verbinden.

2. Selbstheilungseinrichtung nach Anspruch 1, dadurch gekennzeichnet, daß die Ringverbindung einen ersten (A1) und einen zweiten Ring (A2) aufweist, daß jede Station einen ersten (CS1) und einen zweiten (CS2) Koppler aufweist, und daß die ersten Koppler (CS1) zweier benachbarter Stationen miteinander über ein erstes Kabel verbunden sind, und daß die zweiten Koppler (CS2) zweier benachbarter Stationen durch ein zweites Kabel miteinander verbunden sind.

3. Selbstheilungseinrichtung nach Anspruch 1 oder 2, dadurch gekennzeichnet, daß das Relais (6) einer Selbstheilungsschaltung in die Arbeitsstellung geht, wenn die Erfassungsleitung (12; 13), die seine Betätigungsschaltung (7) mit der Selbstheilungsschaltung einer anderen Station verbindet, unterbrochen wird.
